# NEUE EUROPÄISCHE PATENTSCHRIFT

(11) **EP 2 890 552 B2**
(45) Veröffentlichungstag und Bekanntmachung des Hinweises auf die Entscheidung über den Einspruch: **22.05.2024**
(45) Hinweis auf die Patenterteilung: 12.10.2016
(21) Anmeldenummer: 13747816.0
(22) Anmeldetag: 01.08.2013
(51) Int. Cl.: B29D 99/00, B29C 70/44, B29C 70/48, B29C 70/54, B29C 44/56, B29C 70/86, B29C 67/24, F01D 5/28, B29L 31/08, B29K 27/06, B29K 75/00, B29K 25/00

(54) **VERFAHREN ZUR FERTIGUNG EINES ROTORBLATTES UND EIN ROTORBLATT EINER WINDENERGIEANLAGE**
METHOD FOR PRODUCING A ROTOR BLADE AND ROTOR BLADE OF A WIND TURBINE
PROCÉDÉ DE RÉALISATION D'UNE PALE DE ROTOR ET PALE DE ROTOR D'ÉOLIENNE

(30) Priorität: 28.08.2012 DE 102012107932
(43) Veröffentlichungstag der Anmeldung: 08.07.2015
(73) Patentinhaber: Siemens Gamesa Renewable Energy Service GmbH, 20097 Hamburg (DE)
(72) Erfinder: EYB, Enno, 24116 Kiel (DE)
(74) Vertreter: Groth, Wieland
(86) Internationale Anmeldenummer: PCT/EP2013/066173
(87) Internationale Veröffentlichungsnummer: WO 2014/032901

(56) Entgegenhaltungen:
- EP-A2- 1 779 997
- WO-A1-2011/081662
- DE-A1-102010 002 131
- GB-A- 2 410 458
- US-A1- 2010 261 000

## Beschreibung

Die Erfindung betrifft ein Verfahren zur Fertigung eines Rotorblattes nach Anspruch 1 sowie ein Rotorblatt nach Anspruch 6.

Verfahren zur Herstellung von Rotorblättern sind im Stand der Technik natürlich bekannt.

Herkömmliche Rotorblätter weisen in der Regel zwei Rotorblatthalbschalen auf, entlang deren Längsrichtung jeweils ein Gurt vorgesehen ist. Der Gurt ist ein faserverstärkter, mechanisch stärker beanspruchbarer Bereich der Rotorblatthalbschale. Zwischen Gurten der sich gegenüberliegenden Rotorblatthalbschalen eines Rotorblattes sind ein einzelner Steg oder mehrere Stege vorgesehen, der bzw. die die Beulsteifigkeit und Biegefestigkeit des Rotorblattes erhöhen. Die Rotorblatthalbschalen sind an ihrer Vorder- und Hinterkante miteinander verklebt und entlang der Gurte an die Stege geklebt.

Die Bereiche zwischen Vorderkante und Gurt sowie Hinterkante und Gurt jeder der Rotorblatthalbschalen ist herkömmlicherweise in einer Sandwichbauweise ausgebildet. Während des Herstellungsverfahrens wird ein Harzsystem in ein trockenes mehrschichtiges Gelege eingebracht, das in dem Halbzeug exotherm reagiert und unter zusätzlicher nachfolgender Wärmezufuhr aushärtet. Es ist eine rotorblattaußenseitige sowie eine rotorblattinnenseitige faserverstärkte Schicht vorgesehen, zwischen denen ein Schaum angeordnet ist.

Aus der WO 2007 / 038930 A ist ein Verfahren zur Herstellung eines faserverstärkten Produktes unter Verwendung eines Harzinfusionsverfahrens RTM (Resin Transfer Moulding) bekannt.

WO 2011/081662 A offenbart ein Verfahren nach dem Oberbegriff des Anspruchs 1 und ein Rotorblatt nach dem Oberbegriff des Anspruchs 6.

Des Weiteren ist aus der DE 101 56 123 B4 ein Verfahren zur Herstellung von faserverstärkten Kunststoffbauteilen aus trockenem faserhaltigem Halbzeug bekannt, wobei ein Harzsystem mittels eines Injektionsverfahrens in das Halbzeug eingebracht wird. Während des Aushärtens des Harzsystems durchläuft das Harzsystem einen exothermen Peak während einer exothermen Reaktion, der durchaus 180 °C erreichen kann. Auch nach Durchlaufen des exothermen Peaks muss zum vollständigen Aushärten des Harzsystems das Harzsystem weiter auf eine Prozesstemperatur von 50 °C bis 100 °C über mehrere Stunden temperiert werden, um vollständig auszuhärten.

Zur Herstellung der Rotorblätter sind daher temperaturfeste Schäume notwendig. Diese sind allerdings nachteiligerweise relativ teuer.

Es ist daher Aufgabe der Erfindung, ein Verfahren zur Herstellung eines kostengünstigeren Rotorblattes sowie ein kostengünstigeres Rotorblatt zur Verfügung zu stellen.

Die Aufgabe wird in ihrem ersten Aspekt durch ein Verfahren mit den Merkmalen des Anspruchs 1 gelöst.

Rotorblätter werden vorzugsweise aus separat gefertigten Bauteilen wie Rotorblatthalbschalen und Stegen zusammengesetzt. Die separaten Bauteile werden in für sie individuell bestimmten Herstellungsformen gefertigt. In die Herstellungsformen werden zunächst mehrere Schichten, beispielsweise faserhaltige Gewebelagen, Schäume, Balsa, usw. übereinander und/oder nebeneinander gelegt. Die so angeordneten Schichten bilden ein vorzugsweise trockenes Halbzeug aus. Das Halbzeug wird in Verfahren wie beispielsweise Resin Injection Moulding (RIM-Verfahren) oder Resin Transfer Moulding (RTM-Verfahren) mit einem Harzsystem getränkt. Das Harzsystem härtet in einer zunächst exothermen chemischen Reaktion und anschließender Wärmezufuhr innerhalb des Halbzeugs aus. Dem harzgetränkten Halbzeug wird, nachdem es in der exothermen Reaktion einen sogenannten exothermen Peak durchschritten hat, extern Wärme zugeführt, um es auf einer niedrigeren Prozesstemperatur zu halten. Auf der Prozesstemperatur härtet das Harzsystem dann vollständig aus. Insbesondere bei Durchlaufen des exothermen Peaks ist die Temperaturbelastung der einzelnen Schichten und Bestandteile des Halbzeugs hoch. Es müssen daher Materialen gewählt werden, die eine hinreichende Temperaturfestigkeit aufweisen. Unter Temperaturfestigkeit eines Materials wird hier verstanden, dass das Material einer bestimmten Temperatur über einen Zeitraum von mehreren Stunden ausgesetzt sein kann, ohne dass seine Beschaffenheit beeinträchtigt wird.

Die Erfindung macht von der Erkenntnis Gebrauch, dass die 'Temperaturverteilung während des Aushärtens des Harzes, insbesondere bei Durchlaufen des exothermen Peaks, nicht über das gesamte mit dem Harzsystem getränkte Halbzeug gleich ist. Insbesondere im Bereich von mehrschichtigen Gewebelagen, die mit einem Harzsystem getränkt werden, entstehen höhere Temperaturen, weil die entstehende Wärme schlechter entweichen kann, während in Bereichen, die in einfacher Sandwichbauweise gebildet sind, die exothermen Peaks geringer ausfallen. Darüber hinaus werden die exothermen Peaks bei einfacher Sandwichbauweise zeitlich kürzer ausfallen, da die Wärme schneller abgegeben werden kann als bei mehrschichtigen Laminaten.

Die Erfindung macht sich die Erkenntnis der ungleichen Temperaturverteilung während des Aushärtens zunutze und schlägt ein Verfahren zur Herstellung eines Rotorblattes vor, indem in Bereichen des Halbzeugs, in denen sich eine erste Aushärtetemperatur einstellt, ein erster Schaum und in Bereichen, in denen sich eine zweite Aushärtetemperatur einstellt, ein zweiter Schaum angeordnet wird und als erster Schaum ein Schaum mit einer höheren Temperaturfestigkeit als der zweite Schaum gewählt wird. Die erste Aushärtetemperatur ist dabei höher als die zweite Aushärtetemperatur, Sie kann um 10° C, 20° C usw. höher sein; d. h. unter einer höheren Temperatur wird hier verstanden, dass die erste Aushärtetemperatur über die Dauer des exothermen Peaks oder die Dauer des gesamten Aushärtevorgangs höher als die zweite Aushärtetemperatur ist. Es kann aber auch nur der Mittelwert der ersten Aushärtetemperatur über die genannte Zeitdauer höher als der Mittelwert der zweiten Aushärtetemperatur sein. Unter der ersten Aushärtetemperatur wird im Weiteren auch eine höhere Aushärtetemperatur und unter der zweiten Aushärtetemperatur eine niedrigere Aushärtetemperatur verstanden.

Es hat sich gezeigt, dass höhere Aushärtetemperaturen bei der Fertigung von Rotorblatthalbschalen, insbesondere in Bereichen entlang der aus mehreren Gewebelagen gebildeten Gurte entstehen, so dass an die Gurte angrenzende schaumhaltige Rotorblatthalbschalenbereiche mit einem ersten Schaum mit einer ersten höheren Temperaturfestigkeit ausgeformt werden, während Rotorblattschalenbereiche mit einer geringeren Aushärtetemperatur aus dem zweiten Schaum mit einer zweiten niedrigeren Temperaturfestigkeit als die erste Temperaturfestigkeit ausgeformt werden.

Bei dem ersten Schaum kann es sich um PVC, SAN oder Polyurethanschäume sowie Anteile von Balsaholz handeln, aus denen die Rotorblatthalbschalen im Stand der Technik vollständig gefertigt wurden. Erfindungsgemäß sind nur noch die während der Fertigung von einer hohen Aushärtetemperatur betroffenen Bereiche der Rotorblatthalbschale mit dem ersten teureren Schaum ausgefüllt, während die Bereiche, die geringeren Aushärtetemperaturen unterworfen sind, mit einem kostengünstigeren Schaum ausgebildet werden können, der eine geringere Temperaturfestigkeit besitzt. Bei dem Schaum mit geringerer Temperaturfestigkeit kann es sich beispielsweise um Schäume aus Polystyrol wie den Schaum Compaxx^{®} 900 der Firma Dow Chemical handeln.

Jede der Rotorblatthalbschalen weist wenigstens einen Gurt auf, der in einer Längsrichtung entlang des Halbzeugs angeordnet und der entlang der Längsrichtung verlaufende Längsseiten aufweist. In einer bevorzugten Ausführungsform des erfindungsgemäßen Verfahrens wird der erste Schaum in einem Streifen entlang der beiden Längsseiten des wenigstens einen Gurtes zwischen dem wenigstens einen Gurt und dem zweiten Schaum angeordnet. Damit dient der erste Schaum als Puffer zwischen dem wenigstens einen Gurt und dem zweiten Schaum; im Bereich des ersten Schaumes bildet sich während des Aushärtens eine höhere Aushärtetemperatur aus.

Daneben bilden sich höhere Aushärtetemperaturen auch in Bereichen von Verklebungen aus.

In einer weiteren bevorzugten Ausführungsform der Erfindung ist der erste Schaum in einem Streifen unmittelbar entlang einer Vorder- und/oder Hinterkante des Halbzeugs der Rotorblattschale angeordnet. Die beiden Rotorblatthalbschalen werden an der Vorder- und/oder Hinterkante miteinander verklebt, und der zweite Schaum wird von der Vorder- und Hinterkante beabstandet in der jeweiligen Rotorblatthalbschale angeordnet. Vorteilhafterweise sind damit nur die bei der Fertigung des Rotorblattes durch Zusammenkleben der Halbschalen einer hohen Aushärtetemperatur unterworfenen Bereiche mit dem ersten hoch temperaturfesten Schaum versehen.

In einer weiteren bevorzugten Ausführungsform der Erfindung ist der erste Schaum in einem Halbzeug eines gegenüberliegende Stegfüße aufweisenden Steges entlang der Stegfüße angeordnet. Bei der Fertigung des Rotorblattes wird zwischen die beiden Rotorblattschalen im Innenraum des Rotorblattes üblicherweise wenigstens ein Steg zwischen die beiden Gurte geklebt. Es bildet sich auch an den Stegfüßen eine erhöhte Aushärtetemperatur aus, vorzugsweise werden auch nur die der höheren Aushärtetemperatur unterworfenen Bereiche des Steges mit dem ersten hoch temperaturfesten Schaum versehen.

In ihrem zweiten Aspekt wird die Aufgabe durch ein eingangs genanntes Rotorblatt mit den kennzeichnenden Merkmalen des Anspruchs 6 erfüllt.

Das eingangs genannte Rotorblatt weist erfindungsgemäß in Bereichen, in denen sich während des Aushärtens eine höhere Aushärtetemperatur einstellt, einen ersten Schaum und in Bereichen, in denen sich eine tiefere Aushärtetemperatur einstellt, einen zweiten Schaum auf, wobei der erste Schaum eine höhere Temperaturfestigkeit als der zweite Schaum aufweist.

Die Anordnung von erstem und zweitem Schaum in den Bereichen, die einer erhöhten bzw. nicht so hohen Aushärtetemperatur während des Fertigungsverfahrens unterworfen sind, spiegelt die Erfindung wider. Der erste Schaum ist vorzugsweise aus der Gruppe PVC, SAN, PU, während der zweite Schaum ein Polystyrol umfassen kann, vorzugsweise das Polystyrol Compaxx^{®} 900 der Firma Dow Chemical.

Günstigerweise umfasst das Rotorblatt eine unterdruckseitige Rotorblatthalbschale und eine überdruckseitige Rotorblatthalbschale, und der erste Schaum ist streifenförmig entlang von Verklebungen zwischen Vorderkanten und/oder Hinterkanten der Rotorblattschalen streifenförmig entlang der Rotorblatthalbschalen angeordnet. Der erste Schaum ist dabei vorzugsweise genau entlang der Ränder der jeweiligen Halbschalen vorgesehen, so dass die eigentlichen Verklebestellen lediglich Bereichen benachbart sind, die den ersten Schaum umfassen.

Erfindungsgemäß weisen die unterdruckseitige Rotorblatthalbschale und die überdruckseitige Rotorblatthalbschale jeweils wenigstens einen Gurt auf, wobei der erste Schaum streifenförmig entlang von Gurträndern zwischen den Gurten und dem zweiten Schaum angeordnet ist. Der erste Schaum ist damit in den Bereichen, die hohen Aushärtetemperaturen unterworfen sind, angeordnet. Das sind die Bereiche, die den Gurten unmittelbar benachbart sind.

In einer besonders bevorzugten Ausführungsform der Erfindung ist wenigstens ein Steg vorgesehen, der gegenüberliegende Stegfüße aufweist, wobei der erste Schaum entlang der Stegfüße streifenförmig, sich über die gesamte Längsrichtung des Steges erstreckend, ausgebildet ist.

Die Erfindung wird anhand eines Ausführungsbeispiels in einer Figur beschrieben. Dabei zeigt:

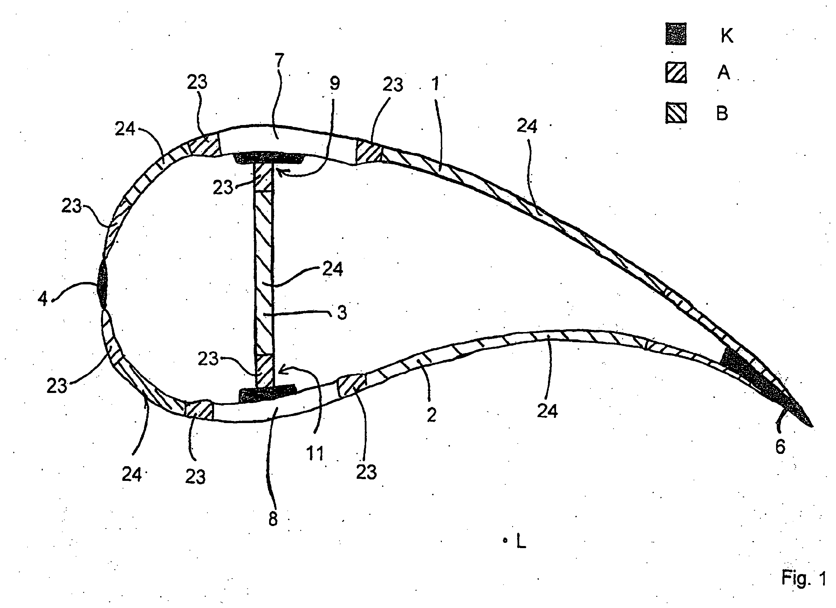

- Fig. 1: einen Schnitt senkrecht zur Längsrichtung eines erfindungsgemäßen Rotorblattes.

Fig. 1 stellt einen nicht maßstabsgerechten Querschnitt des erfindungsgemäßen Rotorblattes dar, der senkrecht zu einer Längsrichtung L, die in der Figur senkrecht zur Zeichenebene verläuft, vorgesehen ist. Dunkle Flächen K stellen Verklebungen, die rechtsschraffierten Flächen A Bereiche mit ersten, hoch temperaturfesten Schäumen und linksschraffierte Flächen B Bereiche mit zweiten, niedrig temperaturfesten Schäumen dar.

Das Rotorblatt umfasst eine unterdruckseitige Rotorblatthalbschale 1 sowie eine überdruckseitige Rotorblatthalbschale 2; die unterdruckseitige Rotorblatthalbschale 1 ist in der Figur oben, die überdruckseitige Rotorblatthalbschale 2 ist in der Figur unten dargestellt.

Die beiden Rotorblatthalbschalen 1, 2 sind an ihren in Rotationsrichtung des Rotorblattes im montierten Zustand vorlaufenden Vorderkanten 4 sowie an ihrer im Betriebszustand in Rotationsrichtung nachlaufenden Hinterkanten 6 miteinander verklebt. Die beiden miteinander verklebten Rotorblatthalbschalen 1, 2 bilden einen Rotorblattinnenraum aus. Insbesondere zur Erhöhung der Beul- und Biegesteifigkeit des Rotorblattes ist etwa im Abschnitt des größten lichten Abstandes der Rotorblatthalbschalen 1, 2 voneinander ein Steg 3 angeordnet. Der Steg 3 verbindet die beiden Innenwandungen der Rotorblatthalbschalen 1, 2 fest miteinander und beabstandet sie konstant voneinander. Der Steg 3 ist in der Fig. 1 als Einzelsteg ausgeführt, es sind jedoch auch Doppelstege und/oder zusätzlich entlang der Hinterkante 6 verlaufende Stege in anderen Ausführungsformen des erfindungsgemäßen Rotorblattes vorgesehen.

Die Bereiche zwischen der Vorderkante 4 und den Gurten 7, 8 und die Bereiche zwischen der Hinterkante 6 und den Gurten 7, 8 sind in einer Sandwichbauweise gestaltet, die eine feste faserhaltige äußere Lage 21 und eine feste faserhaltige innere Lage 22 umfasst, zwischen denen erfindungsgemäß niedriger und höher temperaturfeste Schäume 23, 24 angeordnet sind.

Sowohl entlang eines vorderkantenseitigen Randes und eines hinterkantenseitigen Randes des unterdruckseitigen Gurtes 7 als auch des überdruckseitigen Gurtes 8 ist jeweils ein hoch temperaturfester Schaum 23 angeordnet. Der hoch temperaturfeste Schaum 23 erstreckt sich entlang der gesamten Ränder der Gurte 7, 8. Der hoch temperaturfeste Schaum 23 separiert die Gurte 7, 8 von dem niedrig temperaturfesten Schaum 24.

Darüber hinaus ist am die Vorderkante 4 entlanglaufenden Rand der unterdruckseitigen Rotorblatthalbschale 1 wie auch an dem die Hinterkante 6 entlanglaufenden Rand der unterdruckseitigen Rotorblatthalbschale 1 ein hoch temperaturfester Schaum 23 vorgesehen. Das Entsprechende gilt für die andere überdruckseitige Rotorblatthalbschale 2.

Ausgehend von der Vorderkante 6, besteht so bei beiden Rotorblatthalbschalen 1, 2 entlang des Querschnittes im Inneren der Schalen die Materialabfolge von: hoch temperaturfester Schaum, niedrig temperaturfester Schaum, hoch temperaturfester Schaum, Gurt, hoch temperaturfester Schaum, niedrig temperaturfester Schaum, hoch temperaturfester Schaum.

Der Steg 3 ist ebenfalls in Sandwichbauweise gefertigt, er weist zwei äußere feste faserhaltige Gewebelagen 31, 32 auf, die einen niedrig temperaturfesten Schaum 24 umfassen, wobei die Stegfüße 9, 11 einen hoch temperaturfesten Schaum 23 aufweisen. Der hoch temperaturfeste Schaum verläuft entlang des gesamten Stegfußes 9, 11 in Längsrichtung L.

Zur Herstellung der Rotorblätter werden die beiden Rotorblatthalbschalen 1, 2 getrennt voneinander in dafür jeweils vorgesehenen Herstellungsformen gefertigt. Der Steg 3 wird ebenfalls separat in einer eigenen Herstellungsform gefertigt.

Zur Herstellung einer Rotorblatthalbschale 1, 2 werden in der zugehörigen Herstellungsform mehrere Gelegeschichten übereinander gelegt. Der trockene Gelegeaufbau wird hier auch als Halbzeug bezeichnet. Der Schichtaufbau der Rotorblatthalbschalen 1, 2 verändert sich entlang des Querschnitts. Im Bereich des größten lichten Innenabstandes der beiden Rotorblatthalbschalen voneinander sind in Längsrichtung L der Rotorblatthalbschale 1, 2 verlaufende Gurte 7, 8 vorgesehen. Die Gurte umfassen einen mehrschichtigen Aufbau mit faserhaltigen, teilweise karbonhaltigen Gelegeschichten. Die Gurte 7, 8 sind mechanisch besonders belastbar.

Nachdem das trockene faserhaltige Halbzeug im Querschnitt in unterschiedlicher Konsistenz auf die Form gelegt ist, wird das Halbzeug mit einem Harzsystem infundiert.

Dazu können herkömmliche RIM-Verfahren (Resin-Injection-Moulding) verwendet werden. Beim RIM-Verfahren handelt es sich um eine Art des Vakuuminfusionsverfahrens. Bei Vakuuminfusionsverfahren wird ein Harzsystem durch Vakuumdruck in ein Laminat gesogen. Das Vakuuminfusionsverfahren zeichnet sich üblicherweise dadurch aus, dass das in die Herstellungsform eingelegte trockene faserhaltige Halbzeug von außen mit einer im Wesentlichen luftdichten Vakuumfolie abgedeckt und deren Ränder an der Herstellungsform abgeklebt werden. In den luftdicht verschlossenen, das faserhaltige Halbzeug beherbergenden Innenraum führen Harzzufuhrleitungen über an vorzugsweise zentralen Punkten der Vakuumdichtfolie vorgesehenen Anschlüssen. Den Innenraum umgibt eine Vakuumringleitung, an die eine Vakuumpumpe über einen Schlauch angeschlossen ist. Nach Anschalten der Vakuumpumpe bildet sich im Innenraum zwischen der Auflagefläche und der Vakuumdichtfolie ein Unterdruck aus, der sich auch innerhalb des faserhaltigen Halbzeugs ausbreitet. Anschließend wird der Anschluss geöffnet und durch die Harzzufuhrleitung das Harzsystem in das faserverstärkte Halbzeug eingesogen. Dabei wird insbesondere auf Vermeidung von Blasenbildung und gleichmäßiges Verteilen des Harzsystems innerhalb des Halbzeugs geachtet. Wenn das faserverstärkte Halbzeug vollständig mit dem Harzsystem vollgesogen ist, wird die Harzzufuhr unterbrochen und die Vakuumpumpe abgestellt.

Üblicherweise verwendete Harzsysteme bestehen aus einer Harzkomponente und einem Härter. Das Harzsystem beginnt den Aushärteprozess selbständig unter Durchlaufen eines exothermen Peaks. Die Aushärteprozedur kann durchaus mehrere Stunden dauern. Exotherme Peaks können Temperaturen von 180° C aufweisen; es gibt aber auch Harzsysteme, die einen tieferen exothermen Peak bei etwa 40° C bis 120° C aufweisen.

Damit das Harzsystem vollständig aushärtet, muss das mit dem Hafzsystem infundierte faserhaltige Halbzeug nach Durchlaufen des exothermen Peaks auf eine Prozesstemperatur erwärmt werden. Die Prozesstemperatur muss über den gesamten infundierten Bereich während der gesamten Aushärtedauer gehalten werden.

Während des Durchläufens des exothermen Peaks ist die Temperaturverteilung entlang der Rotorblattschale desselben verwendeten Harzsystems unterschiedlich. Bei der Fertigung der Rotorblatthalbschalen 1, 2 bildet sich entlang der Gurte 7, 8 eine höhere Prozesstemperatur als im schaumhaltigen Bereich der Rotorblatthalbschalen 1, 2 aus. In den dem Gurt benachbarten Bereichen ist daher erfindungsgemäß ein hoch temperaturfester Schaum 23 vorgesehen, der die höhere Temperaturbelastung während des Aushärtevorgangs schadlos übersteht, während in den übrigen Halbschalenbereichen ein niedrig temperaturfester Schaum 24 vorgesehen ist, der weniger temperaturbeständig ist.

Nachdem die Einzelteile des Rotorblattes 1, 2, 3 separat gefertigt sind, müssen sie miteinander verklebt werden.

Der Steg weist an seinen schmalen Seiten jeweils einen Stegfuß 9, 11 auf. Entlang der beiden sich gegenüberliegenden Gurte 6, 7 werden die Stege 3 mit jeweils einem ihrer Stegfüße 9, 11 auf einen der Gurte 7, 8 beim Zusammenbauen des Rotorblattes geklebt. Dort sind an jedem der beiden Stegfüße 9, 11 Verklebungen K vorgesehen. Die beiden gefertigten Rotorblatthalbschalen 1, 2 sowie der Steg 3 werden miteinander zum Rotorblatt verklebt.

Beim Klebevorgang selbst bildet sich gleichfalls eine exotherme Reaktion aus. Dabei wird in Abhängigkeit von der Dicke der Klebeschicht und den Geometrietoleranzen Wärme entwickelt. Je dicker die Klebeschicht, desto mehr Wärme entwickelt sich und desto heißer werden die Klebeschicht und der sie umgebende Bereich.

Entlang der zu verklebenden Bereiche der Rotorblatthalbschalen 1, 2 und des Steges 3 ist erfindungsgemäß ebenfalls ein hoch temperaturfester Schaum 23 vorgesehen, der auch den Klebevorgang schadlos übersteht. Der hoch temperaturfeste Schaum 23 ist entlang der Vorderkante 4 der Rotorblatthalbschalen 1, 2 sowie der Hinterkante 6 der Rotorblatthalbschalen 1, 2 vorgesehen. Darüber hinaus sind die beiden, den Gurten 7, 8 zugewandten schmalen Seiten der Stege 3, die Stegfüße 9, 11, vollständig von einem hoch temperaturfesten Schaum 23 gebildet, der auch im Bereich der Stegfüße 9, 11 von zwei äußeren Schichten gesandwicht ist.

Der gering temperaturfeste Schaum 24 ist beispielsweise Polystyrol, z. B. Compaxx^{®} 900 der Firma Dow Chemical, mit einer Temperaturfestigkeit von minus 50° C bis plus 75° C, während der hoch temperaturfeste Schaum entweder PVC oder PET sein kann, es kann sich dabei aber auch um SAN oder PU-Schäume handeln, deren Temperaturfestigkeit auch über 180° C liegt. Der insbesondere gering temperaturfeste Schaum soll nach kompletter Aushärtung des Laminats die ursprünglichen, insbesondere die durch andere Schäume erzielbaren mechanischen Eigenschaften hinsichtlich Steifigkeit und Festigkeit aufweisen. Auch während des Aushärtens soll der Schaum eine hinreichende Steifigkeit und Festigkeit aufweisen, so dass es unter Vakuumdruck zu keiner signifikanten Verformung kommt. Der Aushärtevorgang ist auch eine geeignete Wahl einer Kombination von Aushärtetemperatur und Zeitdauer.

### Bezugszeichenliste

- 1: unterdruckseitige Rotorblatthalbschale
- 2: überdruckseitige Rotorblatthalbschale
- 3: Steg
- 4: Vorderkanten

- 6: Hinterkanten
- 7: Gurt
- 8: Gurt
- 9: Stegfuß

- 11: Stegfuß

- 21: äußere Lage
- 22: innere Lage
- 23: hoch temperaturfester Schaum
- 24: niedrig temperaturfester Schaum

- A: Bereiche mit ersten, hoch temperaturfesten Schäumen
- B: Bereiche mit zweiten, niedrig temperaturfesten Schäumen
- K: Verklebungen

- L: Längsrichtung

## Patentansprüche

1. Verfahren zur Fertigung eines Rotorblattes, indem
Schaum (23, 24) in einem Halbzeug angeordnet wird,
in das schaumhaltige Halbzeug Harz eingebracht wird,
das eingebrachte Harz bei Wärmeabgabe aushärtet und sich dabei eine Aushärtetemperaturverteilung ausbildet,
**dadurch gekennzeichnet, dass**
in Bereichen des Halbzeugs, in denen sich eine erste Aushärtetemperatur einstellt, ein erster Schaum (23) und in Bereichen, in denen sich eine zweite Aushärtetemperatur einstellt, ein zweiter Schaum (24) angeordnet wird und
als erster Schaum (23) ein Schaum mit einer höheren Temperaturfestigkeit als der zweite Schaum (24) gewählt wird und
die erste Aushärtetemperatur höher als die zweite Aushärtetemperatur ausgebildet wird.

2. Verfahren nach Anspruch 1,
**dadurch gekennzeichnet, dass** der erste Schaum (23) entlang von Verklebungen und/oder entlang von Gurten (7, 8) angeordnet wird.

3. Verfahren nach Anspruch 1 oder 2,
**dadurch gekennzeichnet, dass** wenigstens ein Gurt (7, 8) entlang des Halbzeugs einer Rotorblatthalbschale (1, 2) angeordnet wird mit entlang der Rotorblatthalbschale (1, 2) verlaufenden Längsseiten und der erste Schaum (23) in einem Streifen entlang der Längsseiten des wenigstens einen Gurtes (7, 8) zwischen dem wenigstens einen Gurt (7, 8) und dem zweiten Schaum (24) angeordnet wird.

4. Verfahren nach Anspruch 1, 2 oder 3,
**dadurch gekennzeichnet, dass** der erste Schaum (23) in einem Streifen unmittelbar entlang einer Vorder- und/oder Hinterkante (4, 6) des Halbzeugs der Rotorblatthalbschale (1, 2) angeordnet wird und mittels einer Verklebung entlang der Vorder- und/oder Hinterkante (4, 6) mit der Vorder- und/oder Hinterkante (4, 6) einer korrespondierenden Halbschale des Rotorblattes (1, 2) verklebt wird und der zweite Schaum (24) von der Vorder- und/oder Hinterkante (4, 6) beabstandet angeordnet wird.

5. Verfahren nach wenigstens einem der vorstehenden Ansprüche,
**dadurch gekennzeichnet, dass** der erste Schaum (23) in einem Halbzeug eines sich gegenüberliegende Stegfüße (9, 11) aufweisenden Steges (3) entlang der Stegfüße (9, 11) angeordnet wird.

6. Rotorblatt, hergestellt in einem der Verfahren nach einem oder mehreren der Ansprüche 1 bis 5,
mit einem Schaum (23, 24)
und einem in den Schaum (23, 24) eingebrachten, sich unter Wärmeabgabe aushärtenden, eine Aushärtetemperaturverteilung ausbildenden Harz,
**dadurch gekennzeichnet, dass**
in Bereichen des Halbzeugs, in denen sich eine erste Aushärtetemperatur einstellt, ein erster Schaum (23) und in Bereichen, in denen sich eine zweite Aushärtetemperatur einstellt, ein zweiter Schaum (24) angeordnet ist und
der erste Schaum (23) eine höhere Temperaturfestigkeit als der zweite Schaum (24) aufweist und
die erste Aushärtetemperatur höher als die zweite Aushärtetemperatur ist und eine Rotorblatthalbschale (1, 2) und eine korrespondierende Rotorblatthalbschale (1, 2) jeweils einen Gurt (7, 8) aufweisen und der erste Schaum (23) streifenförmig entlang der Gurte (7, 8) zwischen den Gurten (7, 8) und dem zweiten Schaum (24) angeordnet ist.

7. Rotorblatt nach Anspruch 6,
**gekennzeichnet durch** eine Rotorblatthalbschale (1, 2) und eine korrespondierende Rotorblatthalbschale (1, 2) und **dadurch, dass** der erste Schaum (23) streifenförmig entlang von Verklebungen zwischen Vorderkanten und/oder Hinterkanten (4, 6) der Rotorblatthalbschalen (1, 2) streifenförmig entlang der Rotorblatthalbschalen (1, 2) angeordnet ist.

8. Rotorblatt nach einem der Ansprüche 6 oder 7,
**gekennzeichnet durch** einen Steg (3) und **dadurch, dass** der Steg (3) gegenüberliegende Stegfüße (9, 11) aufweist und der erste Schaum (23) entlang der Stegfüße (9, 11) streifenförmig angeordnet ist.

9. Rotorblatt nach wenigstens einem der Ansprüche 6 bis 8,
**dadurch gekennzeichnet, dass** der erste Schaum (23) aus der Gruppe PVC, SAN, PU stammt.

10. Rotorblatt nach wenigstens einem der Ansprüche 6 bis 9,
**dadurch gekennzeichnet, dass** der zweite Schaum (24) ein Polystyrol ist.

## Claims

1. A method of producing a rotor blade, by arranging a foam material (23, 24) in a semi-finished product, introducing resin into the semi-finished product containing foam material, the resin introduced hardening during the dissipation of heat and a hardening temperature distribution being produced in this case, **characterized in that** a first foam material (23) is provided in regions of the semi-finished product in which a first hardening temperature is set and a second foam material (24) is provided in regions in which a second hardening temperature is set, and a foam material with a higher temperature than the second foam material (24) is selected as first foam material (23) and the first hardening temperature is made higher than the second hardening temperature.

2. A method according to Claim 1, **characterized in that** the first foam material (23) is arranged along adhesion areas and/or along belts (7, 8).

3. A method according to Claim 1 or 2, **characterized in that** at least one belt (7, 8) is arranged along the semi-finished product of a half shell (1, 2) of a rotor blade with longitudinal sides extending along the half shell (1, 2) of the rotor blade, and the first foam material (23) is arranged in a strip along the longitudinal sides of the at least one belt (7, 8) between the at least one belt (7, 8) and the second foam material (24).

4. A method according to Claim 1, 2 or 3, **characterized in that** the first foam material (23) is arranged in a strip directly along a front edge and/or rear edge (4, 6) of the semi-finished product of the half shell (1, 2) of the rotor blade, and is glued by means of an adhesion area along the front edge and/or rear edge (4, 6) with the front edge and/or rear edge (4, 6) of a corresponding half shell of the rotor blade (1, 2) and the second foam material (24) is arranged at a distance from the front edge and/or rear edge (4, 6).

5. A method according to at least one of the preceding Claims, **characterized in that** the first foam material (23) is arranged in a semi-finished product of a web (3) having opposed web bases (9, 11) along the web bases (9, 11).

6. A rotor blade produced in a method according to any one of Claims 1 to 5, with a foam material (23, 24) which is arranged in a semi-finished product, and a resin which is introduced into the foam material (23, 24) hardening with the dissipation of heat and forming a temperature distribution, **characterized in that** a first foam material (23) is provided in regions of the semi-finished product in which a first hardening temperature is set and a second foam material (24) is provided in regions in which a second hardening temperature is set, and the first foam material (23) has a higher temperature resistance than the second foam material (24), and the first hardening temperature is higher than the second hardening temperature and a half shell (1, 2) of the rotor blade and a corresponding half shell (1, 2) of the rotor blade have one belt (7, 8) each and the first foam material (23) is arranged in the form of a strip along the belts (7, 8) between the belts (7, 8) and the second foam material (24).

7. A rotor blade according to Claim 6, **characterized by** a half shell (1, 2) of a rotor blade and a corresponding half shell (1, 2) of a rotor blade, and in that the first foam material (23) is arranged in the form of a strip along adhesion areas between front edges and/or rear edges (4, 6) of the half shells (1, 2) of the rotor blade in the form of a strip along the half shells (1, 2) of the rotor blade.

8. A rotor blade according to any one of Claims 6 or 7, **characterized by** a web (3), and in that the web (3) has opposed web bases (9, 11) and the first foam material (23) is arranged in the form of a strip along the web bases (9, 11).

9. A rotor blade according to at least one of Claims 6 to 8, **characterized in that** the first foam material (23) originates from the group PVC, SAN and PU.

10. A rotor blade according to at least one of Claims 6 to 9, **characterized in that** the second foam material (24) is a polystyrene.

## Revendications

1. Procédé pour la fabrication d'une pale de rotor, de la mousse (23, 24) étant placée dans un produit semi-fini, de la résine étant apportée dans le produit semi-fini contenant de la mousse, la résine apportée durcissant lors de l'émission de chaleur et une répartition de la température de durcissement se formant, **caractérisé en ce qu'**une première mousse (23) est placée dans les zones du produit semi-fini dans lesquelles il se règle une première température de durcissement et une seconde mousse (24) est placée dans les zones dans lesquelles il se règle une seconde température de durcissement et une mousse avec une résistance à la température plus élevée que la seconde mousse (24) est choisie comme première mousse (23) et la première température de durcissement est configurée plus élevée que la seconde température de durcissement.

2. Procédé selon la revendication 1, **caractérisé en ce que** la première mousse (23) est placée le long de collages et/ou le long de courroies (7, 8).

3. Procédé selon la revendication 1 ou 2, **caractérisé en ce qu'**au moins une courroie (7, 8) est placée le long du produit semi-fini d'une demie coque de pale de rotor (1, 2) avec des côtés longitudinaux qui sont le long de la demie coque de pale de rotor (1, 2) et que la première mousse (23) est placée dans une bande le long des côtés longitudinaux de la courroie qui existe au moins (7, 8) entre la courroie qui existe au moins (7, 8) et la seconde mousse (24).

4. Procédé selon la revendication 1, 2 ou 3, **caractérisé en ce que** la première mousse est placée dans une bande directement le long d'une arête antérieure et/ou postérieure (4, 6) du produit semi-fini de la demie coque de pale de rotor (1, 2) et est collée au moyen d'un collage le long de l'arête antérieure et/ou postérieure (4, 6) d'une demie coque correspondante de la pale de rotor (1, 2) et la seconde mousse (24) est placée espacée de l'arête antérieure et/ou postérieure (4, 6).

5. Procédé selon au moins l'une des revendications précédentes, **caractérisé en ce que** la première mousse (23) est placée dans un produit semi-fini d'une traverse (3) qui présente des pieds de traverse situés l'un en face de l'autre (9, 11) le long des pieds de traverse (9, 11).

6. Pale de rotor fabriquée dans un procédé selon l'une des revendications 1 à 5 avec une mousse (23, 24) qui est placée dans un produit semi-fini et une résine qui est apportée dans la mousse durcissant lors de l'émission de chaleur et formant une répartition de la température de durcissement, **caractérisée en ce qu'**une première mousse (23) est placée dans les zones du produit semi-fini dans lesquelles il se règle une première température de durcissement et un seconde mousse (24) est placée dans les zones dans lesquelles il se règle une seconde température de durcissement et la première mousse (23) présente une résistance à la température plus élevée que la seconde mousse (24) et la première température de durcissement est plus élevée que la seconde température de durcissement et une demie coque de pale de rotor (1,2) et une demie coque correspondante de pale de rotor (1,2) présentent chacune une courroie (7, 8) et la première mousse (23) est placée en forme de bande le long des courroies (7, 8) entre les courroies (7, 8) et la seconde mousse (24).

7. Pale de rotor selon la revendication 6, **caractérisée par** une demie coque de pale de rotor (1,2) et une demie coque correspondante de pale de rotor (1, 2) et en ce que la première mousse (23) est placée en forme de bande le long de collages entre des arêtes antérieures et/ou des arêtes postérieures (4, 6) des demies coques de pales de rotor (22) en forme de bande le long des demies coques de pales de rotor (12).

8. Pale de rotor selon l'une des revendications 6 ou 7, **caractérisée par** une traverse (3) et en ce que la traverse (3) présente des pieds de traverse en face l'un de l'autre (9, 11) et la première mousse (23) est placée en forme de bande le long des pieds de traverse (9, 11).

9. Pale de rotor selon au moins l'une des revendications 6 à 8, **caractérisée en ce que** la première mousse (23) vient du groupe PVC, SAN, PU.

10. Pale de rotor selon au moins l'une des revendications 6 à 9, **caractérisée en ce que** la seconde mousse (24) est un polystyrène.
